# EUROPEAN PATENT SPECIFICATION

(11) **EP 2 447 715 B1**
(45) Date of publication and mention of the grant of the patent: **19.06.2013**
(21) Application number: 10189567.0
(22) Date of filing: 01.11.2010
(51) Int. Cl.: G01N 30/60, B01J 20/285, G01N 30/52

(54) **Method for forming polymeric porous layer open tubular columns by photopolymerisation with visible light**
Verfahren zur Herstellung von polymerischen Festschichtkapillarsäulen durch Photopolymerisation mit sichtbarem Licht
Procédé de fabrication de colonnes polymères ouvertes tubulaires à couche poreuse par photopolymérisation en lumière visible

(43) Date of publication of application: 02.05.2012
(73) Proprietor: Agilent Technologies, Inc., Santa Clara, CA 95051 (US)
(72) Inventor: DAVIES, John, Shropshire, SY3 0NZ (GB); Reid, Elizabeth Ann, Church Stretton Shropshire, SY6 6AX (GB); Claes, Paul Emile, Church Stretton Shropshire, SY6 6AX (GB)
(74) Representative: Foster, Mark Charles

(56) References cited:
- US-A1- 2008 318 334
- DULAY M T,CHOI H N, ZARE R N: "Visible light-induced photopolymerization of an in situ macroporous sol-gel monolith", JOURNAL OF SEPARATION SCIENCE, vol. 30, 2007, pages 2979-2985, XP002627405, Weinheim, Germany DOI: 10.1002/jssc.200700328
- VAZ F A S ET AL: "External polyacrylate-coating as alternative material for preparation of photopolymerized sol-gel monolithic column", TALANTA, ELSEVIER, AMSTERDAM, NL, vol. 76, no. 1, 30 June 2008 (2008-06-30), pages 226-229, XP022664022, ISSN: 0039-9140, DOI: DOI:10.1016/J.TALANTA.2008.02.007 [retrieved on 2008-03-07]
- WALSH Z ET AL.: "Photoinitiated polymerisation of monolithic stationaty phases in polyimide coated capillaries using visible region LEDs", CHEMICAL COMMUNICATIONS, vol. 48, 28 December 2008 (2008-12-28), pages 6504-6506, XP002627184, Cambridge, UK ISSN: 1359-7345, DOI: 10.1039/b816958f
- WALSH Z ET AL: "Visible light initiated polymerization of styrenic monolithic stationary phases using 470 nm light emitting diode arrays", JOURNAL OF SEPARATION SCIENCE 2010 WILEY-VCH VERLAG DEU LNKD- DOI:10.1002/JSSC.200900624, vol. 33, no. 1, January 2010 (2010-01), pages 61-66, XP002627185, ISSN: 1615-9306
- SVEC ET AL: "Porous polymer monoliths: Amazingly wide variety of techniques enabling their preparation", JOURNAL OF CHROMATOGRAPHY, ELSEVIER SCIENCE PUBLISHERS B.V, NL, vol. 1217, no. 6, 5 February 2010 (2010-02-05), pages 902-924, XP026853185, ISSN: 0021-9673 [retrieved on 2009-10-02]

## Description

### FIELD OF THE INVENTION

This invention generally relates to polyimide-coated (PI-coated) capillary columns for gas chromatographic separations and particularly to PI-coated capillary columns of the type known as Porous Layer Open Tubular (PLOT) and more particularly to PI-coated PLOT columns.

### BACKGROUND OF THE INVENTION

Gas Chromatography (GC) is a chromatographic technique used for analyzing mixtures of volatile compounds. The stationary phase consists typically of a microscopic layer of liquid or polymer on an inert solid support material or a porous polymeric material that functions as both stationary phase and support material, coated inside a piece of glass or metal tubing called a column. In certain cases the glass tubing comprises of a fused silica capillary. The mobile phase is a carrier gas, typically an inert or an unreactive gas such as helium or nitrogen. The instrument used to perform gas chromatography is called a gas chromatograph. The gaseous compounds being analyzed interact to differing extents with the stationary phase and such differences cause each compound to elute from a column at a different time, known as the retention time of the compound.

Capillary GC columns are typically between 15 and 60 m in length and have an internal diameter *of ca.* 40 to 600 µm. The capillary is normally made of fused silica that is exterior coated with a polymer to provide ruggedness. Most preferably for ruggedness and also for resistance to thermal degradation, this coating is of polyimide (PI), built up to *ca.* 25 µm thickness following multiple applications during the capillary manufacturing process (see LCGC North America 2002 Vol. 20, No.10, p 928). Fused silica capillaries are also manufactured with TEFLON AF^{®} and acrylate coatings for specialist applications though these both tend to be less robust and less thermally resistant than equivalent PI coatings.

Capillary Open Tubular (OT) columns can be > 99% open and therefore allow much longer column lengths to be used than packed columns for the same backpressure. This can be a particularly efficient arrangement when capillary columns are used. OT columns fall into two categories: Wall Coated Open Tubular (WCOT) Columns in which the coating is usually a liquid layer between 0.1 and 8.0 µm, and Porous Layer Open Tubular (PLOT) Columns typically with a porous solid layer between 5 to 50 µm thick in columns of internal diameter 320 µm or 530 µm. Various materials can be used as the stationary phase layer in PLOT columns and these include alumina, porous silica, porous carbon, and porous polymers. The techniques for coating the walls with porous materials or particles are largely proprietary but stable and reproducible columns can be prepared. Major applications for PLOT columns are in the analysis of gases and volatiles (boiling point < 150 °C), more typically analysis and the separation of low molecular weight hydrocarbons for the petrochemical industries.

Of the various porous materials available, porous polymer PLOT columns have the broadest applicability and also exhibit the best mechanical stability. Porous polymer PLOT columns have good retention and selectivity characteristics for volatile compounds which allows them to be separated at temperatures above ambient temperatures, and are therefore widely used not only in the petrochemical industries, but also the chemical, pharmaceutical and environmental sectors, with applications typically in the analysis of low boiling compounds such as hydrocarbons, alcohols, ethers, sulfur-containing compounds, solvents and chloro-fluorocarbons.

The porous polymers used in PLOT columns are generally based on a skeleton of divinylbenzene (DVB). The formulations used to manufacture these porous polymers normally incorporate pore-forming materials called porgens. Pores in the polymer can provide a very large surface area, although permeability of the pore structure is also necessary. High surface area in combination with long column length is important for good loading capacity. The retention mechanisms operating in PLOT columns can be either gas-solid or gas-liquid chromatography, and there is the potential for fast mass transfer between the mobile gaseous phase and the thin porous polymer layer that is the stationary phase.

PLOT columns containing porous polymers can be considered relations of polymeric porous monolithic columns wherein in cross-section, the center of or a significant portion of the monolithic stationary phase is absent. Monolithic columns have been developed in recent years as alternatives to typical particle-packed column technologies for a wide range of chromatographic applications. Such monoliths often afford equivalent resolution to smaller particles but with lower column backpressures. Polymer monoliths are commonly prepared *in situ* using thermally initiated polymerization of a solution containing an initiator, monomer(s) and porogen(s). Photoinitiated polymerization can also be performed, commonly using ultraviolet (UV) illumination and suitable photoinitiator systems.

A typical mechanism for monolith formation is where the radical initiator is decomposed or activated by heat or light and induces chain growth of the monomers in solution such that the growing polymer chains become insoluble in the solvent and start to precipitate forming nuclei. The precipitating nuclei attract other growing chains and monomer(s) and become swollen. Polymerization continues both within the nuclei and also the solution. The nuclei grow in size and attract other nuclei to form microglobules. Aggregation of microglobules and interconnection of polymer chains between microglobules leads to further growth in size and eventually produces porous particles (Irgum, et al. (1997) Chem. Mater. 9, 468). These particles then effectively form a "snow" that falls from the solvent and build up on the capillary wall. In turn, growing particles will further aggregate with one another to form a contiguous porous mass of polymer within the capillary. For PLOT columns, the proportions of monomers in solution are limited so that the capillary is incompletely filled, leaving behind a central void once the polymerization reaction is completed and the solvent removed.

During removal of the solvent following the polymerization reaction, it is sometimes found that the polymer is loosened or shrinks away from the capillary wall and may be ultimately lost from the capillary, or can block the capillary. Therefore prior to the polymerization reaction, it is common practice for a bifunctional anchoring group such as (trimethoxysilyl)propyl methacrylate (MPTMS) to be used to stabilize the porous polymer on the walls of the capillary.

In fused-silica capillary manufacture, the drawing of the capillary at very high temperatures leads to the loss of many silanol groups on its interior surface. This surface requires reactivation to afford silanol groups. These silanol groups are then available to be used as points of attachment for the anchoring group. Once the silane functionality of the anchoring group is bonded to the capillary wall, its vinyl functionality is available to be incorporated into a portion of the growing polymer chains during the polymerization process. These chains eventually become incorporated into particles and stabilize the monolithic porous polymer to the capillary wall (e.g. U.S. Patent No. 5,145,579 to Eguchi).

PLOT -type columns for GC were first introduced in the 1960s (Horvath, et al. (1963) Nature 191, 71) and capillary porous polymeric PLOT columns were first described a decade later (Hollis et al. (1973) J. Chromatog. Sci. 11, 535). The techniques for producing these porous polymer PLOT columns have improved with time. However despite their current broad applicability and widespread usage, all PLOT columns and particularly porous polymer PLOT columns typically suffer from issues associated with the mechanical stability of the porous layer. Changes in gas velocity, pressure or vibrations and surface stress can result in the release of particles which can create restrictions in the column and result in variable flow characteristics over time and from column to column. This can be a significant problem for applications that require consistency in the retentivity of analytes and predictable retention times. Furthermore, the carrier gas can transport particles released from the column to the detector and give rise to "spikes" on the chromatogram trace. If many particles are released, they may contaminate the detection system and block valves. Consistency in loading capacity and higher loading capacities are also areas where improvements would benefit porous polymer PLOT column users.

LED technology has continued to develop since the 1960s. The efficiency and light output of LEDs have been continuing to improve, doubling approximately every 36 months ("Haitz's law", Technology Focus Section "LEDs and their Applications" - Graydon, O., ed., (2007) Nature Photonics 1, 23). Consequently, the use of LED-based photoinitiated polymerization as a route to porous polymer PLOT columns in PI coated capillaries has become more practical of late. Developments in high output LED technologies have made available compact, bright, cool, concentrated, light sources with narrow emission characteristics.

LEDs are now available in a wide range of wavelengths including versions that whose emissions fall within the near-UV to visible part of the spectrum. LEDs of this type had initially been developed for applications in display lighting and have more recently found applications in dental fillings and through-coat curing. Versions exist with a sufficiently narrow angle of illumination and sufficiently high intensity of output, to be able to promote efficient polymerization of both liquid monomers and monomer solutions-especially when used in combination with newer commercially developed, efficient, visible wavelength photoinitiator systems.

For the manufacture of porous polymer PLOT columns in PI coated capillaries for GC, photoinitiated polymerization is attractive. It enables spatial control over where the reaction occurs and control over the reaction time, both of which are difficult to achieve with thermally initiated polymerization, thus giving improved control over the end product. Photo-polymerization can also be used in conjunction with a secondary thermal cure to achieve improved ruggedness.

Photoinitiated polymerizations have most commonly been carried out using UV wavelength radiation (Irgum, et al., (1997) Chem. Mater. 9, 468). This is limiting in that the both the "mold" and solution containing the monomer(s), porogen(s) and solvent are required to be transparent at UV wavelengths. However, the PI coating of standard capillaries is known to be strongly absorbing below ca. 500 nm. It has been reported that UV radiation cannot be used to induce efficient polymerization in such capillaries (Walsh, et al., 2008 Chem. Commun. p 6504). Furthermore, divinyl benzene (DVB) and styrene are usually the main monomeric components used in the manufacture of porous polymeric PLOT columns. DVB absorbs very strongly up to 330 nm and its absorbance tails off at higher wavelengths. Similarly, styrene absorbs strongly up to ca. 300 nm. Initiator systems that absorb at wavelengths in the region up to ca. 360 nm must compete with quenching (absorption of photons) by DVB and styrene, effectively inhibiting efficient photoinitiation of polymerization (Walsh, et al., 2010 J. Sep. Sci. 33, 61). Consequently, the conventional choice for radical polymerizations of styrene and divinyl benzene containing mixtures within PI coated capillaries has been with thermal-initiation rather than photo-initiation.

In a few cases, the preparation of particles of poly(styrene-co-divinylbenzene) has been reported using conventional UV light sources utilizing both the standard free radical and so-called reversible addition-fragmentation chain transfer polymerization mechanisms (Irgum, et al,. 2007 Macromols. 40, 1962, Paczkowski, et al., 2003 Photobiol A 159, 115, Ran, et al., 2007 J. Appl. Polym. Ski.105, 398). For example, Irgum *et al.* used free radical polymerization with azo-*bis*-isobutyronitrile (AIBN) as the photo- initiator to synthesize poly(styrene-co-divinylbenzene) particles. Careful choice of photoinitiator was required for the reaction to proceed at all, but the absorption of AIBN at 365 nm was still too close to the absorbance band of both DVB and styrene, and the polymerization in this system required impractically long polymerization times of 24-163 hours.

UV cure photopolymerization within capillaries has been accomplished in some cases by removing a section of the PI coat from the fused-silica capillary to afford a UV-transparent window. However this is only appropriate for relatively small windows and renders the capillary very fragile in this region where the PI has been removed. Other examples have used UV-transparent TEFLON-AF^{®} coated or acrylate coated fused-silica capillaries. But the drawback with these is that they are less mechanically robust and less thermally resistant than their PI coated equivalents.

UV-LEDs have been reported to induce polymerization both in solution (McDermott, S.L., et al., (2008) Opt. Laser Technol., 40, 487) and in UV-transparent poly(tetrafluoroethylene) (PTFE) capillary (Abele, S. et al., (2008) Analyst 133, 864). Longer wavelength radiation has also been used, for example, Walsh et al., (2010 J. Sep. Sci. 33, 61-66) reported the photoinitiated polymerization of styrene and DVB to form monolithic stationary phases within PTFE-coated fused-silica capillaries and also in channels within micro-fluidic chips, using an array of 470 nm LEDs as the source of illumination.

However, the vast majority of fused-silica capillary columns in use are of the PI-coated variety. PI-coated capillaries are preferred for most capillary separatory applications as they are more durable and thermally resistant than their counterparts with UV-transparent coatings. The ability to efficiently manufacture by photopolymerization, fused-silica capillaries containing porous styrenic, polymer layers or monoliths whilst still retaining a protective PI-coating on the capillary would be useful.

A recent paper by Walsh et al. (Chem. Comm. 2008 p 6504) avoids issues with PI strongly absorbing below approx. 500 nm by using much longer wavelength light to induce free radical polymerization of organic polymer monoliths within PI coated fused-silica capillaries. Walsh reported the use of red LEDs with emission maximum at 660 nm and a three-component initiator system consisting of a cyanine dye sensitizer with a borate counterion radical initiator in conjunction with an alkoxy-pyridinium salt to polymerize a solution of glycidyl methacrylate (GMA) and ethylene dimethacyrlate (EDMA) in a mixture of porogenic solvents. However this system produced inhomogeneous wall coating of polymer due to the varying light intensity throughout the capillary and the high absorptivity of the dye. The complex three-component initiator system solutions are markedly sensitive to atmospheric oxygen and can bleach rapidly in daylight to an inactivated form that may be disadvantageous in terms of process robustness.

Another approach, reported by Dulay *et al.,* described the synthesis of a silica sol-gel monolith in the presence of an acid catalyst, water, and toluene in a PI coated capillary by cationic polymerization using a cool fluorescent lamp equipped with a bandpass filter to produce 470 nm light. (Dulay, M. T., et al., (2007) J. Sep. Sci. 30, 2679). Here, the photoinitiator was a two-component titanocene/diarylonium salt system utilizing Irgacure 784 (BASF) as a sensitizer and diphenyliodonium chloride (DPI) as photoinitiator. The titanocene acts as a photosensitizer that tunes the absorption wavelength of the onium salt photoinitiator from the short wavelength region of the UV spectrum to the visible region by indirect activation, involving electron transfer between the onium salt and a photosensitizer. Therefore, photosensitization of diarylonium salts was required in order to carry out *in situ* photoinitiated cationic polymerization of a methacrylate-substituted alkoxy silane in the visible region inside a PI-coated fused-silica capillary. However, this two-component system is difficult to use in practice, as Irgacure 784 is readily soluble in most organic solvents whereas DPI is not. Inhomogeneous solutions can result in poor reproducibility and uniformity of reaction. Therefore selection of suitable solvent mixtures is required for the solubility of both components, which restricts choice of reaction and porogenic solvents when compared with a single component organic soluble initiator system. It is noted that for this Irgacure 784-DPI initiator system, photopolymerization did not occur when illuminated with 470 nm wavelength light in the absence of either component.

A method for forming a monolithic polymer within a polyimide coated support for use in chromatography, according to the preamble of claim 1, is described in an article by Dulay et al. in J. Sep. Sci. (2007), 30, 2979-2985.

Accordingly, while prior art methods for photoinitiated polymerization have been described, the results are less than satisfactory and the procedures are complex and unreliable.

### SUMMARY OF THE INVENTION

Additional objects, advantages and novel features of the invention will be set forth in part in the description which follows, and in part will become apparent to those skilled in the art upon examination of the following, or may be learned by practice of the invention.

According to the invention, there is provided a method for forming a monolithic polymer within a polyimide coated support for use in chromatography, as defined in claim 1.

In a preferred embodiment, the invention comprises an efficient method to produce a porous polymer PLOT gas chromatography column by the photopolymerization of styrenic monomers using a bis-acyl-phosphine oxide (BAPO) initiator, involving illumination through a polyimide-coated fused-silica capillary or column by visible wavelength light (470 nm) from an array of LEDs, to produce a porous polymer layer on the interior surface of the capillary.

Preferably, the polyimide coated support is a fused-silica capillary, having an internal diameter between 40 µm and 600 µm. The method can further comprise bonding to the inside of the support an anchoring molecule comprising both silyl and vinyl functionality (e.g., 3-(trimethoxysilyl) propyl methacrylate). In certain embodiments, the polymerizable monomers comprise aryl-containing hydrocarbon monomers, such as but not limited to divinylbenzene and styrene. In certain embodiments, the bis-acyl-phosphine oxide photoinitiator is selected from Irgacure 149, Irgacure 819, Irgacure 1700 or Irgacure 1800, Irgacure 1850, Irgacure 1870, Irgacure 2022, Irgacure 2100 or mixtures thereof, preferably, Irgacure 819. Preferably, the blue light is provided by a source whose emission spectrum encompasses both: i) the upper wavelength limit of absorption of the bis-acyl-phosphine oxide initiator (specifically 465 nm and below) and; ii) part of the marginally transparent region of the polyimide-coating material (specifically 430 nm - 480 nm). In particular embodiments, the blue light is provided by a tungsten filament lamp, fluorescent tube, LED or LASER.

In a particular embodiment, a method is provided for preparing a porous polymer Q-Type PLOT GC chromatography column, comprising a) providing a polyimide coated fused-silica capillary of inner diameter selected from 250µm, 320µm or 530µm; b) bonding to the inside of said fused-silica capillary an anchoring molecule comprising both silyl and vinyl functionality; c) applying to the inside of said capillary a polymerization mixture comprising divinylbenzene and styrene, Irgacure 819 photoinitiator, and optional solvents and porogens; and d) exposing said capillary containing the polymerization mixture to blue light from a plurality of LEDs whose peak emission occurs within the wavelengths 430nm to 480nm for a time sufficient to polymerize said monomers. Preferably, the anchoring molecule comprising both silyl and vinyl functionality is 3-(trimethoxysilyl) propyl methacrylate. The time sufficient to polymerize the monomers can vary (e.g., depending on the light intensity and initiator concentration), but typically ranges from 30-60 minutes. Shorter polymerization times can be achieved using more powerful light sources such as flashing or strobing light sources.

Photoreactors are also described herein for performing photoinitiated polymerization inside a polyimide coated capillary, comprising an array or arrays comprising a plurality of blue LEDs arranged so as to evenly illuminate a capillary concentrically disposed within the photoreactor. The photoreactor can further comprise a reel-to-reel mechanism for spooling the polyimide-coated capillary past the array of LEDs, thereby allowing the full length of capillary to be exposed to the light from the LEDs. Preferably, the photoreactors provide a peak emission occurring within the wavelengths 430 nm to 480 nm.

### BRIEF DESCRIPTION OF THE DRAWINGS

FIG. 1 illustrates the absorbance and emission spectra of bis-acyl-phosphine oxide (Irgacure 819), PI and 470 nm blue LED, respectively.

FIG. 2 illustrates a prototypical photoreactor for preparing the polymer monolith inside a short length of PI coated capillary.

FIG. 3 illustrates a prototypical photoreactor incorporating a spooling mechanism for preparing the polymer monolith inside a longer length of PI coated capillary.

FIG. 4 illustrates the polymer layer formed within a PI coated capillary.

### DETAILED DESCRIPTION OF THE INVENTION

### I. Definitions and overview

Before the present invention is described in detail, it is to be understood that unless otherwise indicated this invention is not limited to specific monomers, substrates, or the like, as such may vary. It is also to be understood that the terminology used herein is for the purpose of describing particular embodiments only and is not intended to limit the scope of the present invention.

It must be noted that as used herein and in the claims, the singular forms "a," "and" and "the" include plural referents unless the context clearly dictates otherwise. Thus, for example, reference to a "monomer" includes one or more monomers; reference to "a polymer" includes two or more polymers, and so forth.

Where a range of values is provided, it is understood that each intervening value, to the tenth of the unit of the lower limit unless the context clearly dictates otherwise, between the upper and lower limit of that range, and any other stated or intervening value in that stated range, is encompassed within the invention. The upper and lower limits of these smaller ranges may independently be included in the smaller ranges, and are also encompassed within the invention, subject to any specifically excluded limit in the stated range. Where the stated range includes one or both of the limits, ranges excluding either or both of those included limits are also included in the invention.

As used herein the term "single photoinitiator" refers to a compound that exhibits photo-induced generation of free radicals when exposed to blue light. The single photoinitiator does not require any energy donor or exciting molecule to photosensitize or transfer energy in order to generate free radicals.

As used herein, the term "BAPO" refers generically to bis-acyl-phosphine oxides, of which bis-(2,4,6-trimethylbenzoyl) phenylphosphine oxide (known commercially as Irgacure 819) is preferred. There are a number of reported BAPO species that can be utilized in the instant methods provided that the BAPO absorb light above the cutoff wavelength for the polyimide.

A generic formula for BAPO species can be described by the generic structure shown in **1**: 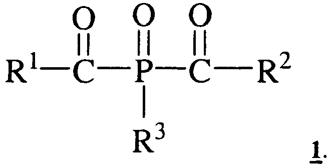 Typical non limiting examples include where R¹ and R² are identical or different and are a radical for the formula: 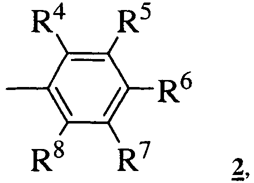 in which R⁴ and R⁸, independently of one another are C₁ to C₁₂ alkyl or C₁ to C₁ alkoxy; R⁵, R⁶ and R⁷, independently of one another are hydrogen, (C₁ to C₁₂) saturated or unsaturated alkyl, (C₁ to C₁₂) saturated or unsaturated alkoxy, or halogen; and where R³ is a C₁ to C₁₈ alkyl, cyclopentyl, cyclohexyl, or a radical of formula **3**: 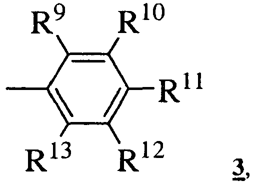 in which R⁹ through R¹² are hydrogen, halogen, (C₁ to C₁₂) saturated or unsaturated alkyl, or (C₁ to C₁₂) saturated or unsaturated alkoxy).

As used herein the term "anchoring molecule comprising both silyl and vinyl functionality" refers to a molecule that can first react with silanol residues on a silica surface such as fused-silica or glass and which can also react with vinyl monomers or growing polymer chains to form a constituent part of a polymer. An exemplary but non-limiting example is trimethoxysilyl propyl methacrylate. Other examples of "anchoring molecules" can be found within Gelest Inc.'s "Silane Coupling Reagents" brochure (http:Hwww.gelest.com/pdf/couplingagents.pdf). For example, such reagents include monopodal silanes such as those with the general formula shown in **4**: 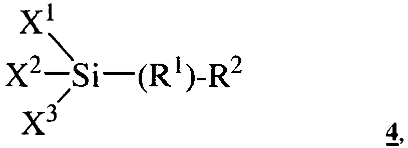 where X¹, X², X³ are hydrolyzable groups, C₁ to C₆ alkoxy, amino or halogen; R¹ is a bond or a C₁ to C₂₀ saturated alkyl species which may contain, any or combinations of: linear, branched or ring structures; R² is one to three methacrylate, acrylate, vinyl or cyclohexenyl group(s).

Also included are dipodal silanes with the general formula **5**: 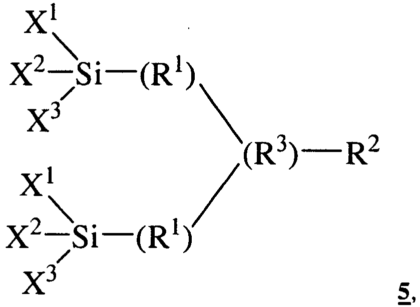 where X¹, X², X³ are hydrolyzable groups, C₁ to C₆ alkoxy, amino or halogen; R¹ is a bond or a C₁ to C₂₀ saturated alkyl species which may contain, any or combinations of linear, branched or ring structures; R² is one or two methacrylate, acrylate, vinyl or cyclohexenyl group(s); and R³ is a C₁ to C₂₀ saturated alkyl species which may contain any or combinations of linear, branched or ring structures.

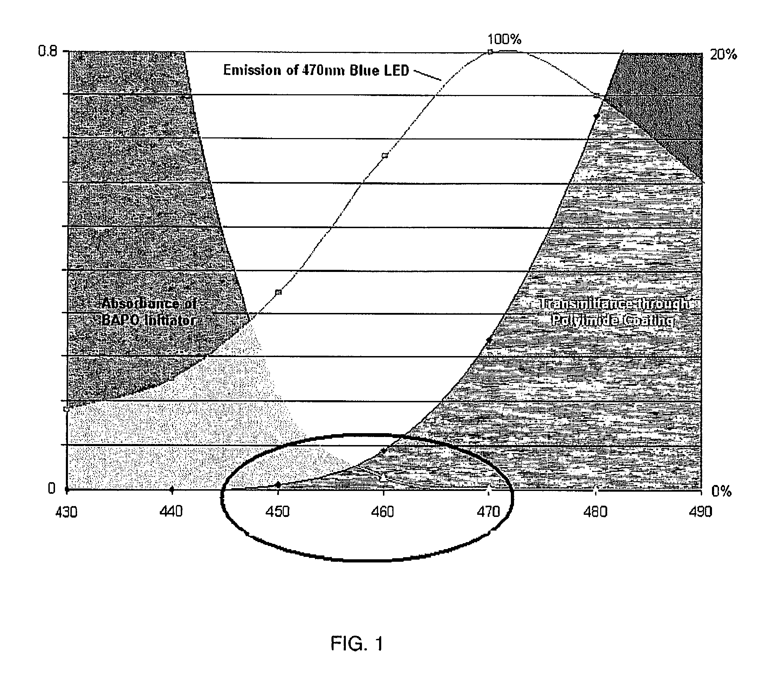

As referred to herein, the term "marginal transparency" refers to residual transparency of a PI coating to incident light radiation. The spectral region this "marginal transparency" exists within, is bounded by: a) the wavelength below which the layer of PI does not allow the transmission of light radiation (A); and, b) the wavelength (B) at which the same layer of PI is sufficiently transparent such that it has an absorbance of 1.0. Referring to the PI film of FIG.1, the boundary (A) is at ca. 445 nm and boundary (B) is ca. 473 nm, and thus the defined region of marginal transparency lies between these two wavelengths, i.e. 445 to 473 nm.

The present inventors have surprisingly discovered a method for *in situ* photoinitiated polymerization inside a PI-coated capillary using a single component high efficiency photoinitiator and excitation wavelengths outside the optimum absorption range. The method results in a surprisingly efficacious polymerization utilizing excitation wavelengths in the range of wavelengths absorbed by the PI coating and at the absorption tail of the photoinitiator. Hence it is surprising that the polymerization proceeds in a manner suitable for manufacturing- with ease of use, short reaction times and use of conventional reagents.

Embodiments of this novel method preferably utilize a single component high efficiency photoinitiator such as the bis-acyl-phosphine oxides developed and commercialized by Ciba Specialty Chemicals in the mid to late 1990s for the effective "through curing" of pigmented coatings (see Photoinitiators for UV Curing - "Formulators' Guide for Coatings" - Ciba Specialty Chemicals Ltd). A single component high efficiency photoinitiator is a *bis*-acyl-phosphine oxide photoinitiator (or "BAPO"), of which Irgacure 819 or *bis*-(2,4,6-trimethylbenzoyl) phenylphosphine oxide is more preferred. Irgacure 819 is understood to be an unusually highly efficient radical generator as each molecule of initiator can produce up to four initiating radical species (Deitliker, K. et al., (1994) CHIMIA 48, 423-426). Its intended application is in curing of thicker pigmented coatings ("through curing"), and it was further developed recently in the field of dentistry for the cure of polymeric fillings. The BAPO type photoinitiators are used because of their "through cure" characteristics, solubility in a range of organic solvents, and ability in solution to absorb light, typically working with wavelengths up to ca. 440 nm, and beyond such wavelengths at higher initiator concentrations with absorption tailing off to zero above 470 nm. These desired spectral characteristics are illustrated in FIG. 1.

Certain embodiments of the invention pertain to methods and apparatuses for preparing porous polymer monolithic coatings using high efficiency single component photoinitiators to effect photoinitiated polymerization inside supporting structures that absorb at UV wavelengths. Such porous polymer monolithic coatings are used in various applications, such as capillary GC, capillary liquid chromatography (LC) and capillary electrokinetic chromatography (CEC) and are particularly difficult to form from styrenic monomers for use in porous polymer PLOT columns inside of PI-coated capillaries using photoinitiated polymerization, because of the strong absorption characteristics of the PI coating and styrenic monomers at UV wavelengths.

Polymer coatings on fused-silica capillary columns are widely used in the art of chromatography in view of the need to provide a protective and structurally supporting layer on the column exterior. However, PI, the most preferred of these polymer coatings, poses serious difficulties in photoinitiated polymerization reactions due to its absorption of the excitation wavelengths most commonly used for efficient photopolymerization reactions.

Although practitioners have been extensively employing similar devices and methods for the preparation of both porous polymeric monoliths and porous polymer PLOT type capillary columns, none have reported efficient photoinitiated polymerisation through a PI-coated fused-silica capillary of styrenic monomers, nor of a porogen-containing solution of styrenic monomers using a single photoinitiator.

Various aspects and embodiments of the invention will be described in greater detail below.

### II. SUPPORTS

Supports typically employed in the manufacture of chromatography or other laboratory equipment or industrial products include polymers and inorganic substrates such as silica. The present application pertains particularly to polymeric coatings on supports that provide structural support, and also absorb UV light, making photoinitiated polymerization difficult to impossible inside the support. A prototypical polymer for coating is polyimide.

Preferred supports include capillaries such as are utilized in chromatography and microfluidics applications. Typical capillaries utilized in the inventive methods are fused-silica PI coated type commonly used in gas chromatography column applications (e.g., from Agilent Technologies Middelburg, The Netherlands). Suitable inside diameter dimensions range from 40 µm to 600 µm (e.g., 530 µm) inside diameter. Other size GC capillaries such as 180 µm, 250µm, and 320 µm inside diameters would be expected to perform similarly. An overview of typical manufacturing methods used to produce such capillaries can be found in "Fused-Silica Capillary - The Story behind the Technology", Steven Griffith (2002) *LCGC* 20, 928. PI-coated capillaries are by far the most common in use for GC applications due to their robust, inert and temperature resistant characteristics. Fused-silica capillaries are also available with other coatings such as PTFE or acrylate. These offer advantages of improved transparency at shorter wavelengths, as PI starts to absorb strongly at wavelengths below 500 nm. However in most other aspects such PTFE- or acrylate-coated capillaries tend to be inferior to PI-coated capillaries and tend only to be used in short lengths for CEC and LC applications.

### III. CAPILLARY PREPARATION

When manufacturing polymeric porous layers or polymeric monoliths inside fused-silica capillaries, it has often been found that a significant proportion of the polymeric contents can be lost when rinsing solution or gas is passed through the capillary. Therefore it has proved necessary and is now common practice to stabilise or tie-in the polymeric structures formed within the capillary tubing to the fused-silica wall. This is accomplished by using an anchoring molecule whereby one end of the anchor covalently bonds to the fused-silica wall and the other end of the anchor is incorporated into polymer chains growing inside the capillary. A range of broadly similar methods exists to attach anchoring molecules to the wall and a range of different anchoring molecules can be used. Such anchoring molecules are characterised by the presence of both terminal alkoxy-silyl- groups to bond to silanols on the silica surface together with terminal vinyl groups at the opposite end of the molecule to later become incorporated into a growing polymer chain within the capillary tube. 3-(Trimethoxysilylpropyl) methacrylate (MPTMS) is the most commonly employed anchoring group and is also utilized in this invention.

To provide optimal attachment of the anchoring species to the silica wall, the silica wall should have a good coverage of silanol groups. During the fused-silica capillary drawing process, high temperatures are encountered and many silanol groups are lost. Therefore alkaline hydrolysis followed by aqueous acid treatment can be used to repopulate the surface with silanol groups and thus activate the internal surface of the silica capillary. Following rinsing with solvent, the capillary is filled with a solution of MPTMS which reacts to form a vinylized surface on its inner wall ready to be incorporated into growing polymeric material. These procedures are described in further detail in Example 3.

### IV. MONOMERS

The methods described herein can be practiced with a wide variety of polymerizable monomers. In general, polymerizable monomers include monomers comprising at least one vinyl or allyl group, and in certain embodiments include aromatic monomers such as styrene and divinylbenzene. However, additional monomers that can be used include styrene or divinylbenzene and optionally substituted variants such as alkylated styrenes and the like. The polymerizable monomers preferably comprise aryl moieties including C₅₋₁₀ monocyclic or bicyclic aryl groups, optionally substituted with nonpolar substituents including C₁₋₁₂ branched or unbranched alkyl, for example.

Preferably, the monomer has the formula **6** 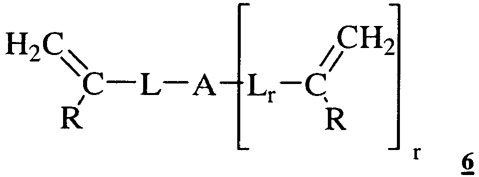 where L is a bond or a C₁₋₁₂ branched, unbranched, or cyclic alkyl;
A is a C₅₋₁₀ monocyclic or bicyclic aryl or heteroaryl, optionally substituted with C₁₋₁₂ branched or unbranched alkyl, and r is 0 or 1. Typical aryl moieties include benzene, toluene, xylene, and naphthalene. In particular embodiments, the aryl moiety can comprise a bicyclic ring wherein one ring is aryl while the other is not aryl. Typical polymerizable monomers are mono- or disubstituted with vinyl, allyl, propenyl, butenyl, etc. groups capable of free radical mediated polymerization. Monomers having only one polymerizable olefin group are uncrosslinkable, and typically include vinyl or allyl substituted C₅₋₁₀ monocyclic or bicyclic aryl, optionally substituted with C₁₋₁₂ branched or unbranched alkyl, or combinations thereof. Particular examples of uncrosslinkable monomers include styrene, vinylnaphthalene, vinylxylene, allyltoluene or combinations thereof. Monomers having at least two polymerizable olefin groups are crosslinkable, and typically include divinyl or diallyl substituted C₅₋₁₀ monocyclic or bicyclic aryl, optionally substituted with C₁₋₁₂ branched or unbranched alkyl, or combinations thereof. Particular crosslinkable monomers include divinylbenzene, divinyltoluene, divinylxylene, diallylnaphthalene, or combinations thereof.

Porous polymers in GC PLOT columns of the category known as the "Q-Type" are typically comprised of divinyl benzene copolymers with styrene. Therefore, for Q-Type porous polymer PLOT GC columns, the monomers used are preferably limited to divinyl benzene of various grades and purities and styrene.

In the examples herein, 63% or 96% divinylbenzene and styrene are utilized, though other purely hydrocarbon styrenic crosslinkers and monomers could also feasibly be employed as replacements for or in conjunction with divinylbenzene and styrene.

### V. POROGENS

In reactions to produce porous polymers, the porogen or porogens can be chosen to optimize the desired porosity. Generally, the polymer phase separates from the reaction solution due to insolubility because its molecular weight has reached the solubility limit and/or due to crosslinking. Phase separation of crosslinked nuclei is necessary for the formation of macroporous morphology. The choice of a good or poor solvent (in relation to the growing polymer) as a porogen affects phase separation. Poor solvents cause earlier phase separation of the polymer and the newly formed phase swells with monomers from the reaction mixture because the polymer is acting as a better solvent for these monomers than the porogenic solvent giving larger globules and ultimately larger pores. Conversely good solvents compete with monomers in the solvation of nuclei and form smaller globules and hence smaller pores (Frechet (1996) Chem. Mater. 8, 744). A high surface area for the porous polymer layer is of importance in GC for retentivity of analytes, therefore the porogenic solvents or solutions used in this invention are chosen to obtain a high pore volume.

### VI. PHOTOINITIATORS

Photoinitiated polymerization can be an efficient process for rapidly producing polymeric materials. The photoinitiator is capable of absorbing the incident radiation (e.g., UV and/or visible light) and producing free radicals that initiate polymerization of monomers and/or pre-polymer systems into linear polymers or crosslinked networks. However, in order to polymerize monomer solutions within a PI-coated capillary, the photoinitiator must be capable of being activated by incident radiation of a wavelength that can pass through a PI-coated fused-silica capillary wall. Examples of photoinitiation through PI-coated fused-silica capillaries are rare, and have required complex multi-component photoinitiators to succeed. For example, Walsh et al. reported the use of a photoinitiator system activated by red (660 nm) LEDs (Walsh et al., (2008) Chem. Commun. p6504) wherein the initiator is a three component system consisting of a commercially available cyanine dye sensitizer with a borate counterion radical initiator (i.e. n-butyltriphenyl borate salt of a cyanine dye, 3-butyl-2-[5-(1,3-dihydro-3,3-dimethyl-1-propyl-2H-indolylidene)-penta-1,3-dienyl]-1,1-dimethyl-1H-benzo[e]-indolium - HNB 660, Spectra Group Ltd, Milbury, OH, USA) together with an alkoxy pyridinium salt (i.e. N-methoxy-4-phenyl pyridinium tetrafluoroborate - Sigma-Aldrich). The cyanine sensitizer is excited by the incident light and undergoes single electron transfer from the borate anion to give a cyanine radical and a butyl radical. The second co-initiator, N-methoxy-4-phenylpyridinium tetrafluoroborate (Sigma-Aldrich, Ireland) abstracts an electron from the excited state cyanine dye to produce a methoxy radical and pyridine via reductive cleavage of the N-O bond. The system is reported to be efficient as it generates two radical species per absorbed photon. The monomers used in this system were glycidyl methacrylate and ethylene dimethacrylate and not styrenic monomers of the types required to produce Q-Type porous polymer PLOT columns. The acrylic monoliths were formed within 30 minutes under illumination at 660 nm. However, the inhomogeneity of the monoliths formed and the intolerance of the HNB 660 initiator system to the presence of oxygen, resulting in rapid bleaching in daylight to an inactivated form if degassing is not thorough, are unsatisfactory aspects of this system.

Similarly, Dulay *et al.* reported the use of Irgacure 784 (*bis*-(2,6-difluoro-3-(1-hydropyrrol-1-yl)phenyl)titanocene) as a photosensitizer to polymerize monomers within a PI-coated capillary (Dulay, M. T., et al., (2007) J. Sep. Sci., 30, 2699). Irgacure 784 has a broad absorption spectrum between 400 nm and 500 nm. This titanocene-based molecule reputedly absorbs visible light at 470 nm and transfers its energy to second component of the photoinitiator system, an onium-salt photoinitiator, diphenyliodonium chloride. Dulay et al. used this system to carry out *in situ* photoinitiated free-radical promoted cationic polymerization of methacrylate-containing monomers inside of a PI-coated fused-silica capillary. Both components of this system are necessary for polymerization to occur, however differences in the solubility profiles for the two components can limit solvent choices and make their application more complicated and problematic.

The preferred instant methods utilize a single photoinitiator to initiate polymerization, without requiring another component to transfer or receive energy. Because much of the excitation wavelength of blue light is absorbed by the PI coating, useful photoinitiators must be efficient in order to effect polymerization in reasonable reaction times, e.g., an hour or less of illumination. Preferably, such efficient photoinitiators can generate at least two reactive radicals per photon, thereby providing rapid and effective photoinitiation and short reaction times. Many photoinitiators absorb in the near UV-vis wavelength range, having in general a very small overlap with the excitation spectrum of blue light (peak 470 nm). In addition, photoinitiators useful in "through curing" can be utilized. Through curing photoinitiators generally absorb in the near visible spectrum, above 430 nm. Preferably, the photoinitiator is also soluble in the monomer solution in which the polymerization reaction occurs. For example, in Example 4, Irgacure 819 was used as the photoinitiator and was soluble in the monomer mixture (styrene and divinylbenzene) as well as solvents such as ethanol. Solubility in the porogenic solvent is optional, depending on reaction conditions, concentration and objectives.

Preferably Irgacure 819, *bis*-(2,4,6-trimethylbenzoyl)phenylphosphine oxide, is utilized as the photoinitiator, alone or in combination with other BAPO derivatives. It is a stable compound in its solid crystalline state and has acceptable solubility in a range of organic solvents in which it can be used as a single component photoinitiator. BAPO and other commercial *bis*-acylphosphine oxide blends (Irgacure 1700 and Irgacure 1800), have been reported to initiate photo-polymerization to produce monolithic columns for capillary electrochromatography (CEC) in 40 cm lengths of fused-silica capillaries, but the polyimide coating was first removed from the section of capillary to be illuminated by UV radiation at 365 nm from "blacklight" fluorescent tubes.

BAPO itself is a highly efficient photoinitiator undergoing monomolecular alpha-cleavage with the formation of two initiating radicals showing high photoinitiating reactivity. (Mozner, (2010) Beilstein J. Org. Chem. 6, No. 26, doi:10.3762/bjoc.6.26), published online at http://www.beilstein-journals.org/bjoc/content/pdf/1860-5397-6-26.pdf Other sources claim one BAPO molecule can form up to four radical centres that are capable of initiation because both acyl groups split off during the decomposition (see "Process Improvements Using Ultraviolet Curing Technology," M. Koehler et al., Ciba Specialty Chemicals Inc.).

The absorption spectrum of BAPO in solution tails out into the visible range of the spectrum and its absorption in the visible light spectrum, above 400 nm, becomes obvious when its solutions are at higher concentrations. In solutions at 2.00 wt% concentrations its absorption can reach up to *ca.* 465 nm (see "Process Improvements Using Ultraviolet Curing Technology," M Koehler et al., Ciba Specialty Chemicals Inc.). Shown in FIG. 1 is a UV-vis spectrum measured at 3wt% in ethanolic solution using a UV-Visible Spectrophotometer (Camspec M501). A range of 0.5 wt% to 1.5 wt% of BAPO was typically used in the polymerization experiments described in the Examples. This absorption tail of BAPO into the visible region of the spectrum falls into the same region where the PI-coating begins not to be completely opaque to incident radiation. However, it was unexpected to find that when illuminated with blue light, sufficient radiation could still be absorbed by BAPO molecules in solution whilst within a PI-coated fused-silica capillary for efficient conversion of monomers to polymer to occur.

The method of forming porous polymers from vinyl monomers inside of a PI-coated fused-silica capillary described herein is therefore based on this unexpected reactivity of BAPO when illuminated through the PI-coated fused-silica wall by bright blue light from LEDs with an emission maximum at ca. 470 nm. It is postulated that such reactivity is due to the marginal transparency of the PI coating, coinciding with the emission spectrum of the 470 nm blue LED and furthermore coinciding with surprisingly useable absorption of the BAPO initiator at or very close to the longer wavelength limit of its absorption spectrum in solution (See FIG. 1).

### VII. LIGHT SOURCE AND PHOTOREACTOR

There are a variety of visible wavelength light sources available with outputs that fall in the spectrum of approximately 430 to 480 nm. The most commonly available sources currently include halogen bulbs, fluorescent tubes, LASERs and LEDs. LEDs are preferred because of their efficient, cool, light and well characterized emission spectra, although all of these light sources would be expected to work. Preferred LEDs include those available from Cree (LC503FBL1-15P-A3-00001).

Halogen bulbs generate light when current is passed through a small tungsten filament and heats it to extremely high temperatures. Most of the energy is given off as heat and only a small amount as light. The light is filtered so that only the selective wavelengths are emitted. The heat degrades the bulb components over time (a short lifetime of ca. 100 hrs is fairly typical), light output falls off, and the sample can be heated locally causing inhomogeneous regions of polymerization due to enhanced diffusion and convection.

Fluorescent tubes are gas-discharge lamps that use electricity to excite mercury vapor. The excited mercury atoms produce short-wave ultraviolet light that then can be used to cause a phosphor to fluoresce, producing visible light. Each lamp contains a small amount of mercury, which must vaporize to support the lamp current and generate light. To prevent mercury vapor condensation, the coolest parts of such lamps are designed so that they run at ca. 40°C. Hence a small amount of heat is generated and illuminated samples may show some slight warming. A fluorescent lamp converts electrical power into useful light more efficiently than an incandescent lamp and also has a lifetime of ca. 10,000 to 20,000 hours with some degradation in output over this time. For visible light illumination a cool white tube is used with suitable bandpass filtration to only allow selected frequencies to pass.

In the methods described herein, although other light sources could be used, LEDs are preferred. LEDs are efficient; they consume very little power in their operation, and can emit radiation in a narrow spectrum without wasting power by producing radiation across other redundant wavelength regions. The 470 nm LEDs specified herein concentrate their output over a relatively narrow angle of 15° so again less power is wasted in unnecessary illumination. Although LASERs produce more coherent light, more careful beam alignment and/or lens arrangements would be needed to illuminate the capillary. LEDs run cool and their lifetimes are similar to, or better than fluorescent tubes, typically 20,000+ hours, undergoing relatively little degradation of output over that time. LEDs are more mechanically robust than tungsten filament lamps and fluorescent tubes, and LASERs, being substantially more resistant to shock and vibration. In comparison with LASERs, LEDs are typically less expensive, more compact and generally more convenient to use.

### VIII. METHODS FOR PREPARING OF POROUS POLYMER PLOT COLUMNS

A. Photoreactors

Generically, a photoreactor is an apparatus in which a photochemical reaction can occur. It comprises a vessel which can contain reactant chemicals (and optionally solvent) that can be illuminated by a light source whereby the vessel is at least in some part of sufficient transparency to allow the transmission of light through the vessel's wall and interact with its contents. In the examples described herein the light source comprises an array or arrays of LEDs and the vessel is polyimide-coated fused-silica capillary tubing.

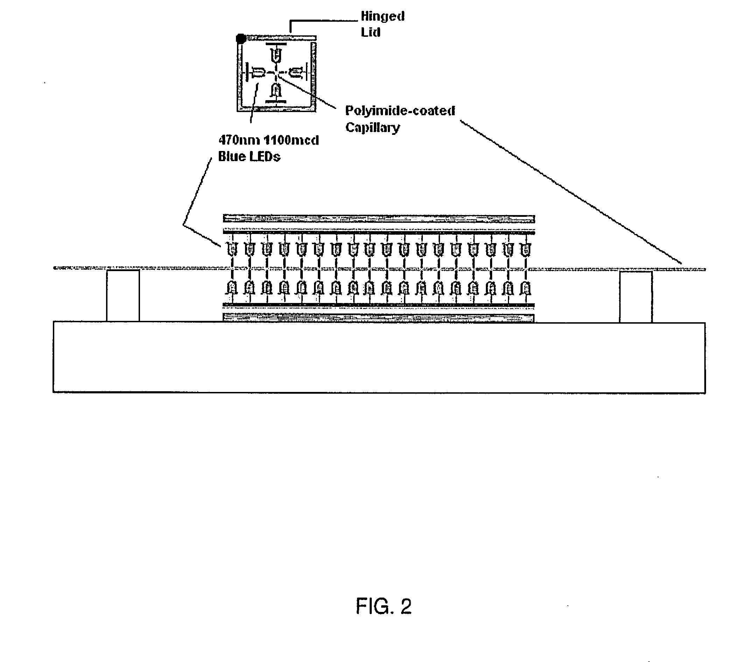

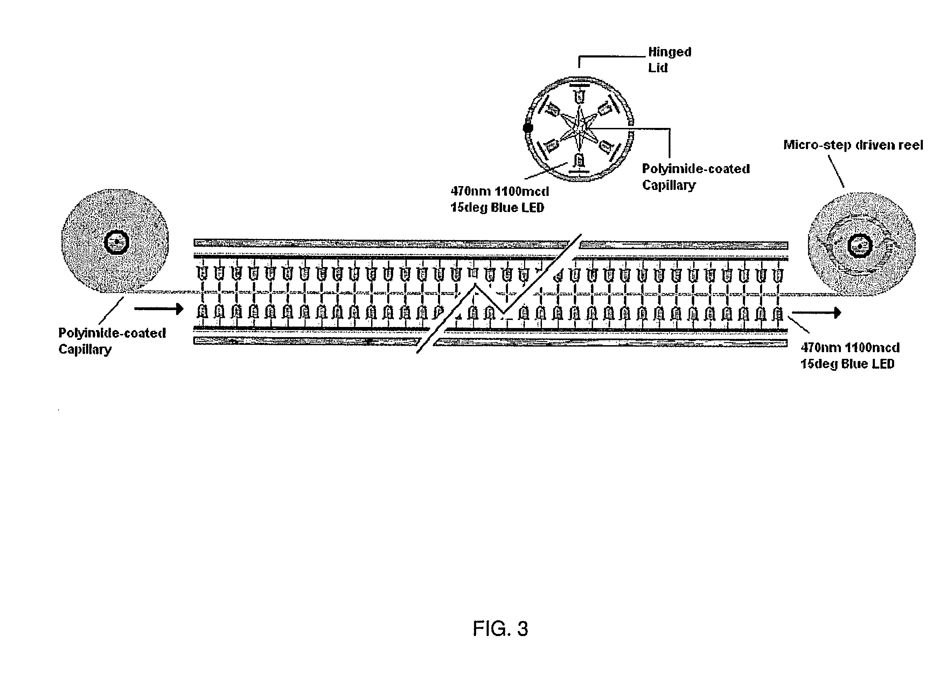

In certain embodiments, a plurality of LEDs can be utilized in photoreactors comprising long strips of LEDs arranged so as to surround a capillary. In one embodiment, 4 strips of LEDs are mounted around the inside of suitable tubing to form the photoreactor, so that the capillary is positioned down the center of the tubing surrounded by illuminating LEDs (see Example 1 and FIG. 2). In another embodiment, 6 strips of LEDs are utilized, potentially providing higher intensity illumination and a narrower angle of illumination (see Example 2 and FIG. 3). A reel-to-reel system can be used to slowly pull the fused-silica capillary through the reactor driven by a micro-step stepper motor. The use of a reel-to-reel system allowed porous polymer-containing capillaries to be prepared in longer lengths (e.g., up to 60 meters) suitable for use in GC applications. Mechanisms to axially rotate the capillary as it passes through the photoreactor can also be utilized to form a more even deposition of the porous polymer around the inner surface of the capillaries.

A variety of photoreactor configurations can be used to prepare the polymer monoliths inside coated substrates such as columns and capillaries. Two examples are described herein. One embodiment provides a small LED photo-reactor for preparing short lengths of monolithic and PLOT capillaries suitable for development of PLOT-type GC columns and short monolithic or PLOT-type LC or CEC columns. As described in Example 1, a reactor body was made from glass reinforced plastic square-section tubing ca. 100mm long x 50mm section. One side of the tubing forms a door to access to the interior. LEDs were wired in parallel with a ballast resistor for each LED. A strip of 18 LEDs was attached to each of the four inside walls of the glass reinforced plastic square section tubing. The 4 strips of LEDs were connected to a power supply which was connected to a cutaway in one side of the square section tubing close to its end to keep the LED's ballast resistors cooled. Each LED provided a high luminous intensity at a dominant wavelength of 470nm and a narrow illumination angle of 15°. An interlock system was fitted so that the high brightness LEDs can only be operated whilst the door on the tubing was closed. The reactor body was mounted on a block and at each open end of the reactor body there was a support arrangement so that a length of capillary tubing could be held in position centrally between the arrays of LEDs. This prototypical photoreactor is depicted in FIG. 2.

In a second embodiment, a larger photoreactor comprising 360 of the same LEDs described above were arranged in 6 strips of 60 LEDs mounted around the interior of a 420mm long x 50mm diameter tube is depicted in FIG. 3 and described in Example 2. This photoreactor is equipped with a spooling mechanism providing a means for advancing the capillary through the photoreactor. The spooling mechanism enables the preparation of longer lengths of porous polymer PLOT capillary columns, as typically used in gas chromatography (i.e. *ca.* 5 to 60 meters length).

B. Capillaries

PI-coated fused-silica capillaries are available in varying sizes from a variety of manufacturers. For porous polymer PLOT columns, the inside diameter of a capillary would normally be within the range of 40 to 600 µm. A typical capillary having a diameter of 530µm was supplied untreated by Agilent Technologies, Middelburg, The Netherlands. A small sample of the polyimide precursor solution used in the manufacture of PI-coated fused-silica capillaries was also supplied. Films of this coating precursor were cast and cured to PI films, from which the absorption spectrum of this coating could be measured, as discussed above. As previously noted the literature reports that the polyimide coating strongly absorbs at wavelengths below 500 nm and this was found to be the case. However it was observed that this was not an absolute cut-off and there was a degree of residual transmission below 500 nm rapidly falling off until *ca*. 430nm below which the PI-coating was effectively completely opaque (see FIG.1).

C. Capillary Preparation

A variety of methods can be used to prepare the capillary columns prior to photopolymerization (Nischang, et al. (2009). Anal. Chem. 81, 7390, Nischang, et al. (2009) J. Chromatog. A 1216, 2355, WO2007/149498A2 to Karger et al.*,* "Silane Coupling Agents" p19, Gelest Inc, 2006). All the procedures are intended to clean and activate the interior surface of the fused-silica capillary to allow the subsequent attachment of the preferred anchoring species, MPTMS and the like. Typically the silyl ends of the anchoring molecule bind to the silanols on the activated fused-silica surface whilst the vinyl functionalities at the opposite end of molecule are present for subsequent incorporation into polymer molecules being formed during the photopolymerization reaction. This preparation is desirable to stabilize the porous polymer that forms on to the interior wall of the capillary. Several exemplary methods are described in Example 3.

In Method I, the fused-silica capillary is washed with acetone to remove organic residues, followed by an aqueous wash to remove any salts, then treated with aqueous sodium hydroxide to activate silanol groups on the inner surface of the capillary, and then an aqueous wash to remove excess sodium hydroxide, a dilute hydrochloric acid wash to remove any sodium salts and finally an ethanol wash to rinse away residual hydrochloric acid. The cleaned tube is treated with an acetic acid buffered ethanolic MPTMS solution and allowed time for the MPTMS to react with silanols on the capillary wall. Finally the tube is rinsed free of reaction solution with acetone and dried with nitrogen gas.

In Method II, the fused-silica capillary is washed with and then allowed time to react with a more concentrated aqueous sodium hydroxide solution to activate silanol groups on the inner surface of the capillary. This is followed by an aqueous wash to remove excess sodium hydroxide, a hydrochloric acid wash to remove any sodium salts and finally an acetonitrile wash to rinse away residual hydrochloric acid. The cleaned capillary is treated with MPTMS solution in dimethylformamide and allowed time for the MPTMS to react with the silanol groups on the capillary wall by heating in an oven at 110°C. Finally the tube is rinsed with acetonitrile to remove unreacted residues and dried with nitrogen gas.

In Method III, the fused-silica capillary is initially washed with ethanol. The capillary was subsequently filled with a dilute solution of MPTMS in acetic acid buffered aqueous ethanol, and after 5 minutes the tube was emptied by applying nitrogen gas pressure leaving behind a coating of the MPTMS. The capillary then filled with nitrogen was heated in an oven at 110 °C and allowed time for the MPTMS coating to react with the silanols on the capillary wall. Finally the capillary is washed out with acetone to remove unreacted residues, and dried under a flow of nitrogen.

Additional methods of capillary preparation can be envisioned, and can be utilized in the inventive methods described herein.

D. Photoinitiators

The preferred photoinitiator utilized in this invention is *bis*-(2,4,6-trimethylbenzoyl)phenyl phosphine oxide (Irgacure 819) 97%, powder, (p/n 511447, supplied by Sigma-Aldrich, Sigma-Aldrich Company Ltd., The Old Brickyard, New Road, Gillingham, Dorset, UK). Technical literature (e.g. Ciba Specialty Chemicals, Technical Documentation - "Photoinitiators for UV curing) includes figures showing absorption spectra of various concentrations of Irgacure 819 solutions, however absorption in solution is only shown for wavelengths up to 440 nm. Reports do show that at higher concentrations, such as at 2.0wt%, its absorption spectrum can reach up to ca. 465 nm albeit as a very fine tail (see "Process Improvements Using Ultraviolet Curing Technology" - M Koehler et al., Ciba Specialty Chemicals Inc.) and our own experimentation (see Figure 3) with BAPO at a 3wt% ethanolic solution confirms this. Nevertheless with such little absorbance at 465nm, it is surprising and unpredictable that excitation with 470nm light through a polyimide coating, reported to absorb strongly at wavelengths below 500 nm, efficient photoinitiated polymerization of styrenic monomers does occur with Irgacure 819.

There is a range of other commercially available BAPO containing photoinitiator systems/blends from BASF. For example, two other commercially available *bis*-acylphosphine oxide containing photoinitiator systems include Irgacure 1700 (a 25% blend of bis(2,6-dimethoxybenzoyl)-2,4,4-trimethyl pentylphosphineoxide with 2-hydroxy-2-methyl-1-phenyl-propan-1-one), and Irgacure 1800 (a 25% blend of bis(2,6-dimethoxybenzoyl)-2,4,4-trimethyl pentylphosphineoxide with 1-hydroxy-cyclohexyl-phenyl-ketone). These two BAPO systems have similar absorption spectra in the near UV to visible region to Irgacure 819 and may be expected to perform similarly. Additional examples include Irgacure 1850 (a 50 % blend of bis (2,6-dimethoxybenzoyl)-2,4,4-trimethyl pentylphosphine oxide with 1-hydroxy-cyclohexyl-phenyl-ketone); Irgacure 1870 (a 70 % blend of bis (2,6-dimethoxybenzoyl)-2,4,4-trimethyl pentylphosphine oxide with 1-hydroxy-cyclohexyl-phenyl-ketone); Irgacure 149 (a 5% blend of bis(2,6-dimethoxybenzoyl)-2,4,4-trimethyl pentylphosphine oxide with 2-hydroxy-2-methyl-1-phenyl-propan-1-one); Irgacure 2022 (a 20% blend of bis (2,4,6-trimethylbenzoyl)-phenylphospine oxide with 2-hydroxy-2-methyl-1-phenyl ketone); Irgacure 2100 (a blend of bis (2,4,6-trimethylbenzoyl)-phenylphospine oxide with 2,4,6-trimethylbenzoyl-phenyl phosphinic acid ethyl ester). These BAPO systems have similar spectral absorption spectra characteristics in the near UV to visible region of the spectrum comparable to that of Irgacure 819 and may be expected to perform similarly. Likewise for other BAPO derivatives with absorption spectra which extend beyond wavelengths of 430 nm. However, Irgacure 819 or BAPO is preferred, as it is reported to be a highly efficient generating up to 4 initiating radicals per initiator molecule and is not diluted with another co-initiator.

Additional species of BAPO include, but are not limited to, those described by formula **1** illustrated below: 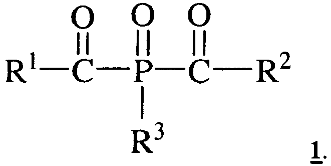 Typical non limiting examples include where R¹ and R² are identical or different and are a radical for the formula: 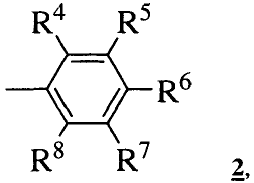 in which R⁴ and R⁸, independently of one another are C₁ to C₁₂ alkyl or C₁ to C₁₂ alkoxy;
R⁵, R⁶ and R⁷, independently of one another are hydrogen, (C₁ to C₁₂) saturated or unsaturated alkyl, (C₁ to C₁₂) saturated or unsaturated alkoxy, or halogen; and where R³ is a C₁ to C₁₈ alkyl, cyclopentyl, cyclohexyl, or a radical of formula **3**: 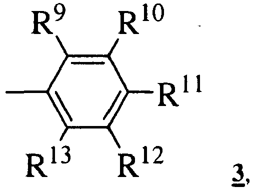 in which R⁹ through R¹² are hydrogen, halogen, (C₁ to C₁₂) saturated or unsaturated alkyl, or (C₁ to C₁₂) saturated or unsaturated alkoxy).

*Bis*-acylphosphine oxides can be used as a component of mixtures of other photoinitiators. However, the present methods improve over methods used previously in not requiring or utilizing energy transfer from a photosensitizer or other component and avoiding solubility and quenching problems encountered previously. Other visible cure photoinitiator systems such as Irgacure 784 and camphorquinone only work efficiently at visible wavelengths as components in two part systems. Irgacure 784 has been used with diphenyl iodonium chloride (DPI), but this system has differential solubility issues and has not been used in PI-coated capillaries with styrenic type monomers. Camphorquinone needs one or more coinitiators to complete the electron transfer/radical generation process {i.e., ethyl-4-dimethylamino benzoate (EDAB) as the initiating system and also N-methoxy-4-phenylpyridinium tetrafluoroborate (MPPB)}. Although this system has been used to photoinitiate polymerization of styrenic monomers in fused-silica capillaries, these capillaries were PTFE-coated and not PI-coated (Walsh et al., (2010) J. Sep. Sci. 33, 63). Another multicomponent initiator system has been used for photoinitiated polymerization of monomers in PI-coated fused-silica capillaries (Walsh et al., (2008) Chem Commun. p 6504). This system comprised HNB660 (Spectra Group Ltd, Milbury, OH, US) with N-methoxy-4-phenyl-pyridinium tetrafluoroborate, and used a red LED at 660 nm that can penetrate the PI-coating. The HNB 660 is a cyanine borate salt. Its solutions can be easily quenched in light in the presence of oxygen and requires careful handling to achieve reproducible results. Such problematic components are preferably avoided in the instant methods.

E. Time of Irradiation

The length of time of illumination necessary to form polymer and ultimately PLOT columns will vary with capillary-type, light output, wavelength, reaction mixture composition, reactor configuration and temperature, and therefore is best determined through experimentation. Precipitation is dependent on the insolubility of the growing polymer whether that is through chain length and/or crosslinking content. Starting initiator and monomer concentrations are another factor in the number of polymer molecules formed and therefore solubility (e.g., if many short polymer chains are formed and all the monomer is consumed then there could be no precipitation). There is no need to expose the reactants to light after all the initiator is consumed. The examples described herein used a typical exposure time of between 40 minutes and 1 hour, dependent on reactor used to reliably produce precipitated polymers within a 530µm PI-coated fused-silica capillary.

F. Preparation of Polymerization Mixture

Styrene and divinylbenzene monomers are typical monomers found in porous polymer PLOT columns of the Q-Type (though other purely hydrocarbon aromatic monomers may be used). These are generally purified, for example, by distillation and filtration through a short column of alumina to remove inhibitors and oligomers. Then, in a mixing vessel (e.g., a Schlenk tube), these monomers are mixed together with solvent/porogen in a variety of proportions as exemplified in Example 4, Table 1, to give a total volume of 1 ml. The desired amount of photo-initiator is added to the solution and the tube covered in foil to protect from premature activation from light. The solution is then degassed (e.g., ultrasonically) during which time the initiator dissolves completely, and the solution is used immediately for the polymerization reaction.

G. Polymerization Reaction

A general polymerization procedure is described as follows:

A length of PI-coated fused-silica capillary is filled with the polymerization mixture. If using a Schlenk tube, the mixture can be transferred from the reservoir using nitrogen gas pressure. After addition of the polymerization mixture, the capillary is sealed at both ends in silicone sealant and then loaded into the photoreactor. As described above, the photoreactor can illuminate either short lengths of capillary or longer lengths using a reel-to-reel mechanism. In each case the capillary to be exposed is aligned along the centre of the photoreactor tube. The blue LEDs are lit and if necessary the stepper driver for the reel-to-reel mechanism is also started.

The 470 nm blue LED illumination causes the BAPO initiator to be activated and the molecule cleaves so that free radicals are generated that cause the *in situ* polymerization to proceed. Pendant methacrylate groups on the capillary walls are incorporated into some growing polymer chains and bond a portion of the polymer to the capillary's interior. As the growing polymer chains become insoluble in the solvent/porogen solution and nuclei form, globules form that crosslink with other globules and form porous polymer particles.

Some particles will be attached to the capillary wall, but others may be free in solution and tend to fall under gravity to the bottom of the capillary. The capillary or the reactor containing the capillary can be rotated so that a more even coating is achieved. The initial concentration of monomers in solution can be chosen such that the column fills with particles to form a porous polymer monolith. At lower monomer concentrations, a coating of porous polymer particles forms on the walls of the tube, providing a method of preparing porous polymer PLOT columns. When the reaction is concluded, the capillary is removed from the reactor, purged of residual liquid and unattached particles (e.g., with nitrogen gas pressure), and is then ready to be conditioned in a GC oven.

In the case of porous polymer PLOT columns of the Q-Type, styrene and DVB monomers are purified and added in the required proportions to the porogen mixture or reaction solvent. The monomers used are exclusively DVB and styrene and mostly these are used in the proportion 2:1 (vol/vol). The porogen or reaction solvents used are ethanol, or ethanol-hexane mix, or a porogenic mixture with the composition: dodecane : 1,2-dimethylcyclohexane : tert-butanol : 2-butanone (50 : 18 : 23 : 9) vol/vol. The total volume of polymerization mixture, monomers and solvent prepared is typically 1 ml. The proportion of solvent to monomers can vary over the experiments from 40 % (vol/vol) to 90 % (vol/vol). The BAPO initiator (used in quantities of (1.5 mg, 5.0 mg and 10.0 mg) is added and the mixture is protected from light and ultrasonically de-gassed. The mixture is pressurized and forced into a length of prepared 530 µm PI-coated fused-silica capillary with MPTMS treated interior walls (three different capillary preparation methods were used). The filled capillary is sealed and exposed to light from 470 nm blue LEDs in a tubular photoreactor for the required time either by use of a timer for a short length of capillary. For longer lengths of capillary the exposure time is its residence in the tubular photoreactor as controlled by its speed of winding on to a take-up reel by a stepper-motor drive. Following the required exposure, the polymer-containing capillary is flushed of residual contents using nitrogen gas and dried in an oven under a flow of nitrogen for the specified time. Sample sections can be examined in cross-section under an optical microscope.

As seen from the results detailed in Example 4, styrenic polymeric coatings could be formed within PI-coated capillaries using illumination from 470 nm LEDs using a variety of methods and compositions: any of the three methods of capillary preparation, BAPO photoinitiator at concentrations of 1.5 mg to 10 mg per ml of reaction solution, monomer contents from 10 % (vol/vol) to 45 % (vol/vol) of the reaction solution and selections from three different porogen/solvent systems. At monomer concentrations of 60 % (vol/vol), monolithic filled capillaries can be formed.

Observations are that monomer content is the major factor in determining the thickness of the polymer coating formed, and ultimately a filled capillary can be formed if desired. Also capillary preparation Method II tended to produce thicker coatings. Altogether, for a 530 µm internal diameter PI-coated fused-silica capillary, internal styrenic polymer coating thicknesses from 12 µm to a totally filled capillary can be produced. The combination of 470 nm blue LED light and commercial BAPO photoinitiator is an unexpected but versatile methodology for producing styrenic polymer coatings within PI-coated fused-silica capillaries.

### IX. Applications and methods of use

The inventive methods described herein to prepare *in situ* photoinitiated polymerization can be utilized in a wide range of applications. The methods are particularly useful for preparing porous polymer PLOT capillary columns. Some exemplary representative examples include chromatography and electrophoretic applications or other separation methods, including capillary GC, capillary HPLC, capillary electrochromatography (CEC), microcapillary HPLC, chip-based microfluidics, capillary chromatography, capillary zone electrophoresis (CZE), and nano-LC. For example, the chromatographic application or separation method can be gas chromatography, high performance liquid chromatography, reversed phase chromatography, size exclusion chromatography, perfusion chromatography, electrochromatography, micro-column liquid chromatography, capillary chromatography, gas-solid chromatography, liquid-solid chromatography, supercritical fluid chromatography, precipitation liquid chromatography, bonded phase chromatography, fast liquid chromatography, liquid chromatography-mass spectrometry, gas chromatography, microfluidics based separations, solid phase extraction separations, or monolith based separations, without limitation.

In certain embodiments, the inventive photopolymerization method can be used to construct *in situ* polymerized polymers, such as polymer monolith or polymeric porous layer open tubular constructs used in chromatography of chip-based separations.

In a preferred embodiment, the inventive photopolymerization method is used in the preparation of Porous Layer Open Tubular (PLOT) capillary columns, which are utilized in gas chromatography (GC) for the analysis of volatile compounds (compounds with boiling points < 150°C). Many types of adsorbent can be used as the porous layer in PLOT columns, however the most versatile adsorbent layers are comprised of porous polymers. Porous polymer PLOT columns have retention and selectivity characteristics that allow volatile compounds to be separated at temperatures above ambient temperatures, and are therefore widely used in the petrochemical, chemical, pharmaceutical and environmental sectors with applications typically in the analysis of low boiling: hydrocarbons, alcohols, ethers, sulfur-containing compounds, solvents and chloro-fluorocarbons.

### X. Advantages of the invention

The methods according to the invention allow the *in situ* photoinitiated manufacture of monolithic polymers, and in particular, PI-coated porous polymer PLOT columns suitable for use in chromatographic applications, from vinyl monomers by visible light photoinitiated polymerization using a single component high efficiency photoinitiator such as bis-acylphosphine oxide. The use of a single component photoinitiator provides greater versatility in synthetic and manufacturing procedures due to its known solubility characteristics and reliability, in contrast to mixtures of photoinitiators and photosensitizers previously utilized.

A major advantage is that styrenic polymers can be formed into porous polymeric PLOT or monolithic columns by *in situ* photopolymerization within standard PI-coated fused-silica capillaries rather than within capillaries with no coating or with alternative less preferred coatings: The ability to form the polymer in PI-coated capillaries is important in GC applications as PI-coated capillaries are more temperature resistant (up to ca. 360°C) compared with PTFE-coated capillaries (up to 120 to 160°C). For other applications where optical transparency at UV wavelengths is not required, PI-coated capillaries are preferred as they are generally more robust than PTFE-coated capillaries and significantly more robust than capillaries without a protective polymer coating layer.

The utilization of photopolymerization using a cool light source (e.g., LEDs) rather than thermal initiated polymerization allows low boiling solvents/porogens to be used during the manufacture and also allows the option of a secondary thermal polymerization/cure step.

In the following examples, efforts have been made to ensure accuracy with respect to numbers used (e.g., amounts, temperature, etc.) but some experimental error and deviation should be accounted for. Unless indicated otherwise, temperature is in degrees °C and pressure is at or near atmospheric.

**EXAMPLES**

### Abbreviations:

- AcOH: Acetic acid
- BAPO: Phenyl-, bis(2,4,6-trimethyl benzoyl-), phosphine oxide
- EtOH: Ethanol
- MeCN: Acetonitrile
- MPTMS: trimethoxysilyl propyl methacrylate

### Example 1

### Prototype LED photoreactor for use with short (120 mm) lengths of capillary

A prototype LED photo-reactor body was constructed from 20cm length glass reinforced plastic 5cm square section tubing. One side of the tubing was removed using a saw then reattached along its length with a hinge to provide a door to access to the interior. A piece of single-sided electronics strip-board (dimensions 11.4 x 36.6 cm, Farnell p/n 147899 Farnell, Canal Road, Leeds, LS12 2TU, UK) was cut into 4 equal 2.8 cm wide strips each 8.0 cm long. Each strip was fitted with 18 x 5 mm, blue 470 nm LEDs (Cree LC503FBL1-15P-A3-00001 Cree Inc, 4600 Silicon Drive Durham, NC 27703 - Famell p/n 1648980). These LEDs were closely packed with a pitch between LEDs of *ca.* 7 mm. Each LED has a luminous intensity of 11000 mcd, at a dominant wavelength of 470 nm and a narrow illumination angle of 15°. The LEDs are wired in parallel with each LED having a 75-Ohm ballast resistor (Farnell p/n 9340920). Each of the four strips of 18 LEDs was attached to an inside wall of the glass reinforced plastic square section tubing. The 4 strips of LEDs were connected to a 5-V, 10-W power supply (p/n 234-200 RS Components, Birchington Road, Corby, Northants, NN 17 9RS, UK). A small 5-V axial fan (p/n 191-597 RS Components) was connected to a cutaway in one side of the square section tubing close to its end to keep the LEDs' ballast resistors cool. A simple safety-interlock micro-switch was fitted so that the LEDs can operate only when the door on the tubing was closed. The reactor body was mounted on a block and at each open end of the tubing were located smaller blocks with narrow "v-shaped" grooves to locate, align and temporarily affix a length of capillary tubing central to the arrays of LEDs. In an alternative configuration a small electric motor was mounted axially at one end of the reactor to allow the capillary tubing to be rotated slowly whilst under illumination. A schematic drawing of this reactor is depicted in FIG. 2.

### Example 2

### Prototype LED photoreactor for use with longer lengths of capillary

A photoreactor was constructed to allow the exposure of longer lengths of capillary (e.g., up to 60 m) tubing to irradiation with 470nm light. This was accomplished by using 360 of the 5 mm Cree 470 nm LEDs (as in Example 1), arranged along 6 x 41cm long custom-made circuit board strips. Each individual strip contained a row of 60 LEDs (and accompanying ballast resistors) with the LEDs spaced at a pitch of ca. 7mm. The strips of LEDs were mounted along the interior length of 5 cm inside diameter rigid PVC tubing (see FIG 2). A cooling fan was mounted to one side of the tube to remove any excess heat generated that might be generated by the ballast resistors that limit the current flow through the LEDs. The LEDs and the small axial fan were connected to a power supply (ASTEC - DPS52-PSU, EXTERNAL, 5 V, 6 A - (p/n 1643213 Farnell). A micro-step stepper-motor and reduction gearbox (stepper motor p/n 340-3727, gearbox p/n 718-919, control board p/n 718-846 all by RS Components) was used to drive a 20-cm diameter winding-reel which was used to slowly pull (1mm/min) a polyimide-coated capillary tubing through the reactor from an identical sized storage spool. In an optional alternative configuration the complete photoreactor apparatus including spools could be mounted on two bearings and slowly rocked back and forth through a wide angle using a dual-acting air-driven ram. A diagram depicting this photoreactor is shown in FIG. 3.

### Example 3

### Capillary Preparation

Cleaning and activating the surface of the silica on the interior of the capillary was performed to allow the subsequent attachment of trimethoxysilyl propyl methacrylate (MPTMS). The pendant methacrylate functionalities subsequently react with the vinyl monomers in the polymerization mixture to anchor the polymer to the capillary. Several (broadly similar) protocols for activation and attachment were used.

### General Procedure for Washing and Filling of Capillaries:

Untreated, polyimide coated, fused-silica capillary tubing 530 µm I.D., supplied by Agilent Technologies, Middelburg, The Netherlands, was used. For the filling or washing of the capillary, a side-arm Schlenk-type tube, used as a reservoir, was filled with the appropriate solvent or solution, a septum was fitted over the open end and the capillary pushed through the septum and into the liquid. Gentle nitrogen pressure was applied via the side arm to drive the solution/solvent into and through the capillary. If the capillary was to remain filled then the open end of the capillary was sealed with a septum or similar prior to de-pressurization of the Schlenk tube.

### Method I

### Activation of Capillary:

The capillary was washed sequentially for several minutes with: acetone, water, 0.2 M sodium hydroxide, water, 0.2 M hydrochloric acid, and ethanol.

### Attachment of Methacrylate Anchor:

A solution of 20% (vol/vol) MPTMS was prepared in ethanol and adjusted to pH5 by dropwise addition of acetic acid. The capillary was filled with this solution and both ends were sealed. The capillary was reacted with the MPTMS solution for 2 hrs and then was washed with acetone, and dried under a flow of nitrogen and then sealed under nitrogen gas.

### Method II

### Activation of Capillary:

The capillary was washed with 1.0M sodium hydroxide and allowed to stand filled for 30 minutes, then rinsed sequentially for several minutes with water, 1.0M hydrochloric acid, and acetonitrile.

### Attachment of Methacrylate Anchor:

A solution of 30% (vol/vol) MPTMS was prepared in DMF. The capillary was filled with this solution and both ends were sealed. The capillary was reacted with the MPTMS solution for 6 hrs in an oven at 110°C and then was washed with acetonitrile, and dried under a flow of nitrogen and then sealed under nitrogen gas.

### Method III

### Activation of Capillary:

The capillary was washed for several minutes with ethanol.

### Attachment of Methacrylate Anchor:

A solution of 95% ethanol in water (vol/vol) was prepared in ethanol and adjusted to pH5 by dropwise addition of acetic acid. Sufficient MPTMS was then added to make up a 2% (vol/vol) solution. The capillary was filled with this solution and both ends were sealed. After 5 minutes the tube was emptied by applying nitrogen gas pressure and the capillary was sealed under nitrogen. The capillary was then heated in an oven at 110°C for 20 minutes and then was washed with acetone, and dried under a flow of nitrogen and then sealed under nitrogen gas.

### Example 4

### Typical Photopolymerization Procedure

Styrene and divinylbenzene monomers were vacuum distilled and stored refrigerated at 2 to 8 °C. Immediately before use, the monomers were filtered through a 3-cm glass column packed with alumina. The monomers (styrene, divinylbenzene) and solvent, of a total volume of *ca.* 1.0 ml were mixed in a small Schlenk tube. A weighed quantity of initiator BAPO was added and the tube covered with aluminium foil to exclude light. Actual quantities used are detailed in Table 1. The solution was then de-gassed in an ultrasonic bath for 5 min. By pressurizing the Schlenk tube (still covered with foil), the required length of prepared capillary column was filled as previously described. Both ends of the tube were sealed. The capillary was then loaded in the photoreactor and exposed to light from the 470 nm LEDs. For short lengths of capillary the exposure was normally for one hour. For longer lengths of capillary the reel-to- reel photoreactor was used and the stepper motor speed of 8.7 mm/min that all segments of the capillary ultimately used would pass through the length of the photoreactor under illumination from the LED strips for 42 minutes.

Following exposure to light radiation, the inside of the capillary was emptied of liquid residues using nitrogen pressure (as previously described). The capillary tubing was then dried in an oven at 150°C under a flow of nitrogen gas for *ca.* 2 hours. *Ca.* 6 mm long representative sections were cut (with a ceramic knife) from lengths of the resulting capillary and mounted vertically to allow microscopic investigation. This photo-polymerization method was able to produce styrenic porous polymer PLOT columns in PI-coated fused silica capillaries.

**Table 1.**

| Experiment No. | Column Preparation Method | Mass of Initiator | Volume of Styrene | Volume of DVB | Reaction Solvent/Porogens and Volumes * |
|---|---|---|---|---|---|
| 1 | I | 5.0mg | 200µL | 200µL | Ethanol 600µL |
| 2 | II | 5.0mg | 200µL | 200µL | Ethanol 600µL |
| 3 | I | 1.5mg | 50µL | 150µL | Ethanol 750µL & Hexane 50µL |
| 4 | II | 5mg | 33µL | 66µL | Solution P 900µL |
| 5 | II | 5mg | 100µ | 200µL | Solution P 900µL |
| 6 | I | 5mg | 33µ | 66µL | Solution P 900µL |
| 7 | I | 5mg | 100µL | 200µL | Solution P 700µL |
| 8 | II | 5mg | 66.5µL | 133µL | Solution P 800µL |
| 9 | I | 5mg | 100µL | 200µL | Solution P 700µL |
| 10 | III | 1.5mg | 50µL | 150µL | Ethanol 750µL |
| | | | | | Hexane 50µL |
| 11 | III | 10mg | 200µL | 400µL | Solution P 400µL |
| 12 | III | 10mg | 150µL | 300µL | Solution P 550µL |

| | | | | | |
|---|---|---|---|---|---|
| * Solution P is a porogenic mixture with the composition: Dodecane (500 µL), 1,2-dimethylcyclohexane (180 µL), tert-butanol (230 µL), 2-butanone (90 µL). | | | | | |

Results:

Experiment 1 produced a polymer lining with a maximum thickness of *ca.* 79 µm.

Experiment 2 with more rigorous capillary preparation (Method II) gave a slightly thicker coating with a maximum thickness of *ca.* 88 µm.

Experiment 3 used a low monomer and initiator concentration and a binary solvent mixture incorporating a small amount of non-polar solvent and produced a polymer coating of reduced maximum thickness of *ca.* 55 µm.

Experiment 4 produced a polymer coating of variable thickness, up to *ca.* 20 µm.

Experiment 5 was identical to Experiment 4 but with increased monomer content and afforded a polymer coating with a greater maximum thickness of ca. 42 µm (*c.f.* 20 µm).

Experiment 6 was identical to Experiment 4 but varied in the method of capillary preparation and yielded the thinnest coating with a maximum measured thickness generally of ca. 12 µm.

Experiment 7 was identical to Experiment 5 but varied both in the method of capillary preparation and monomer concentration to afford a thicker polymer coating with a maximum thickness of ca. 74 µm.

Experiment 8 was similar to Experiment 5 with slightly lower monomer concentration and gave a polymer coating with a maximum thickness of ca. 29 µm.

Experiment 9 was a duplicate of Experiment 7 and gave a polymer coating with a maximum thickness of ca. 56 µm. Preparation Method I generally resulted in thinner coatings when compared with Method II, all else being similar. Higher monomer concentrations gave thicker polymer coatings.

Experiment 10 was identical to Experiment 3 but utilized another variation in method of capillary preparation (Method III). This afforded an irregular coating with a reduced maximum thickness of ca. 27 µm. With regards final coating thickness Method III also was inferior to Method II.

Experiment No. 11 using the same capillary coating method as Experiment 10 but having the starting monomer and initiator concentrations set substantially higher and a monolithic-filled capillary was formed.

Experiment 12, backing off slightly on the monomer concentrations in resulted in substantially filled capillary with a void with a maximum depth of ca. 114 µm.

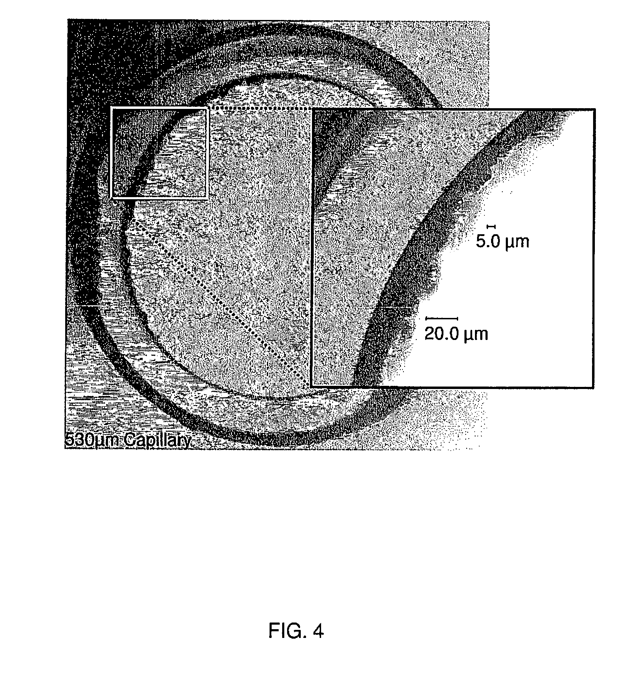

With respect to Experiment 4, this method was used to provide a styrenic porous polymer PLOT PI-coated fused silica capillary column, depicted in FIG. 4, which shows the monolithic polymer layer. FIG. 4 shows a cross-section of a *ca.* 6 mm section of cut capillary which has been mounted vertically on a microscope stage. The section was taken from a capillary produced in Experiment 4 of Table 1 which used a porogenic mixture (comprising linear and cyclic alkanes, an alcohol and a ketone) together with styrene and DVB monomers. The fused-silica capillary is of 530 µm internal diameter. In Figure 4, the outer dark-colored circular layer of the tube in cross-section corresponds to the polyimide coating of *ca.* 25 µm in thickness. Inside this darker layer is a broader translucent layer *ca.* 56 µm in thickness corresponding to the fused-silica wall of the capillary. Inside of this translucent layer is a darker-colored layer with an indistinct inner edge. This feature is shown in more detail in the inset. This inner layer corresponds to the porous polymer coating produced by the photopolymerization reaction. This layer attached to the inner wall of the silica capillary is of variable thickness, up to *ca.* 20 µm (for comparison calibration marks of 5 µm and 20 µm are displayed on the inset).

The methods described above are effective in producing polymeric coating on the inside of the fused silica-capillary under a broad range of experimental conditions varying monomer and of porogen composition, capillary preparation as well as initiator concentration. In addition, monolith filled capillaries can be formed using these methods, as exemplified in experiment 11 where the starting monomer concentrations were higher and a monolithic-filled capillary formed.

## Claims

1. A method for forming a monolithic polymer within a polyimide coated support for use in chromatography comprising:
a) providing a polyimide coated support;
b) applying to the inside of said support a polymerization mixture comprising one or more polymerizable monomers, a photoinitiator, and optional solvents and porogens; and
c) exposing said support containing a polymerization mixture to blue light for a time sufficient to polymerize said monomers;
**characterised in that** said photoinitiator is a bis-acyl-phosphine oxide, wherein the bis-acyl-phosphine oxide is active as a photoinitiator by itself without energy transfer from other components.

2. The method of claim 1, wherein the polyimide coated support is a fused-silica capillary.

3. The method of claim 2, further comprising bonding to the inside of said support an anchoring molecule comprising both silyl and vinyl functionality.

4. The method of claim 1, 2 or 3, wherein said polymerizable monomers comprise aryl-containing hydrocarbon monomers.

5. The method of any one of claims 1 to 4, wherein said bis-acyl-phosphine oxide photoinitiator is selected from Irgacure 149, Irgacure 819, Irgacure 1700 or Irgacure 1800, Irgacure 1850, Irgacure 1870, Irgacure 2022, Irgacure 2100 or mixtures thereof.

6. The method of claim 5, wherein said bis-acyl-phosphine oxide photoinitiator is Irgacure 819.

7. The method of any one of claims 1 to 6, wherein said blue light is provided by a source whose emission spectrum encompasses both:
i) the upper wavelength limit of absorption of the bis-acyl-phosphine oxide initiator (specifically 465 nm and below) and;
ii) part of the marginally transparent region of the polyimide-coating material (specifically 430 nm - 480 nm).

8. The method of claim 7, wherein said source of blue light is selected from a tungsten filament lamp, fluorescent tube, LED or LASER.

9. The method of claim 3, wherein said anchoring molecule comprising both silyl and vinyl functionality is 3-(trimethoxysilyl) propyl methacrylate.

10. The method of claim 4, wherein said aromatic monomers comprise divinylbenzene and styrene.

11. The method of claim 2, wherein said fused silica capillary has an internal diameter between 40 µm and 600 µm.

12. A method according to claim 1 for preparing a porous polymer Q-Type PLOT GC chromatography column; wherein the support is a polyimide coated fused-silica capillary of inner diameter selected from 250µm, 320µm or 530µm; the method further including the step of bonding to the inside of said fused-silica capillary an anchoring molecule comprising both silyl and vinyl functionality; wherein the polymerization mixture comprises divinylbenzene and styrene, Irgacure 819 photoinitiator, and optional solvents and porogens; and wherein the exposure to the blue light consists of exposing said capillary containing the polymerization mixture to blue light from a plurality of LEDs whose peak emission occurs within the wavelengths 430nm to 480nm for a time sufficient to polymerize said monomers.

13. The method of claim 12, wherein said anchoring molecule comprising both silyl and vinyl functionality is 3-(trimethoxysilyl) propyl methacrylate.

## Patentansprüche

1. Ein Verfahren zum Bilden eines monolithischen Polymers innerhalb einer Polyimid-beschichteten Unterstützung für eine Verwendung in Chromatographie, welches aufweist:
a) Bereitstellen einer Polyimid-beschichteten Unterstützung,
b) Anwenden einer Polymerisationsmischung an der Innenseite der Unterstützung, welche ein oder mehr polymerisierbare Monomere, einen Photoinitiator und optional Lösungsmittel und Porogene aufweist, und
c) Aussetzen der Unterstützung, welche eine Polymerisationsmischung enthält, für eine ausreichende Dauer einem blauen Licht, um die Monomere zu polymerisieren,
**dadurch gekennzeichnet, dass** der Photoinitiator ein bis-Acyl-Phosphin-Oxid ist, wobei das bis-Acyl-Phosphinoxid als ein Photoinitiator an sich ohne einen Energietransfer von andere Komponenten aktiv ist.

2. Das Verfahren gemäß Anspruch 1, wobei die Polyimid-beschichtete Unterstützung eine Quarzglas-Kapillare ist.

3. Das Verfahren gemäß Anspruch 2, welches ferner ein Bonden eines Ankermoleküls an die Innenseite der Unterstützung aufweist, welches sowohl eine Silyl- als auch eine Vinyl-Funktionalität aufweist.

4. Das Verfahren gemäß Anspruch 1, 2 oder 3, wobei die polymerisierbaren Monomere Aryl-enthaltende Hydrocarbon-Monomere aufweisen.

5. Das Verfahren gemäß irgendeinem der Ansprüche 1 bis 4, wobei der bis-Acyl-Phosphinoxid Photoinitiator ausgewählt ist von Irgacure 149, Irgacure 819, Irgacure 1700 oder Irgacure 1800, Irgacure 1850, Irgacure 1870, Irgacure 2022, Irgacure 2100 oder Mischungen davon.

6. Das Verfahren gemäß Anspruch 5, wobei der bis-Acyl-Phosphinoxid Photoinitiator Irgacure 819 ist.

7. Das Verfahren gemäß irgendeinem der Ansprüche 1 bis 6, wobei das blaue Licht mittels einer Quelle bereitgestellt wird, deren Emissionsspektrum sowohl:
i) das obere Wellenlängenlimit der Absorption des bis-Acyl-Phosphinoxid Initiators (insbesondere 465 nm und darunter) als auch,
ii) einen Teil der gering transparenten Region des Polyimid-Beschichtungsmaterials (speziell 430 nm - 480 nm)
umfasst.

8. Das Verfahren gemäß Anspruch 7, wobei die Quelle des blauen Lichts ausgewählt ist aus einer Wolfram-Filament Lampe, einer fluoreszierenden Röhre, einer LED oder einem Laser.

9. Das Verfahren gemäß Anspruch 3, wobei das Ankermolekül, welches sowohl Silyl- als auch Vinyl-Funktionalität aufweist, ein 3-(Trimethoxysilyl) Propylmethacrylat ist.

10. Das Verfahren gemäß Anspruch 4, wobei die aromatischen Monomere Divinylbenzen und Styren aufweisen.

11. Das Verfahren gemäß Anspruch 2, wobei die Quarzglas-Kapillare einen inneren Durchmesser zwischen 40 µm und 600 µm hat.

12. Ein Verfahren gemäß Anspruch 1 zum Vorbereiten einer porösen Polymer Q-Typ PLOT GC Chromatographiesäule, wobei die Unterstützung eine Polyimid-beschichtete Quarzglas-Kapillare von einen inneren Durchmesser ist, welcher aus 250 µm, 320 µm oder 530 µm ausgewählt ist, wobei das Verfahren ferner den Schritt eines Bondens eines Ankermoleküls an die Innenseite der Quarzglas-Kapillare beinhaltet, welches sowohl eine Silyl- als auch eine Vinyl-Funktionalität aufweist, wobei die Polymerisationsmischung Divinylbenzen und Styren, Irgacure 819 Photoinitiator und optional Lösungsmittel und Porogene aufweist, und wobei das Aussetzen dem blauem Licht besteht aus einen Aussetzen der Kapillare, welche die Polymerisationsmischung enthält, einem blauen Licht von einer Mehrzahl von LEDs, deren Peak-Emission innerhalb der Wellenlängen 430 nm bis 480 nm für eine ausreichende Dauer auftritt, um die Monomere zu polymerisieren.

13. Das Verfahren gemäß Anspruch 12, wobei das Ankermolekül, welches sowohl eine Silyl- als auch eine Vinylfunktionalität aufweist, 3-(Trimethoxysilyl)-Propylmethacrylat ist.

## Revendications

1. Procédé de fabrication d'un polymère monolithique à l'intérieur d'un support revêtu de polyimide pour une utilisation en chromatographie comprenant :
a) la fourniture d'un support revêtu de polyimide ;
b) l'application sur l'intérieur dudit support d'un mélange de polymérisation comprenant un ou plusieurs monomères polymérisables, un photoinitiateur, et des solvants et porogènes optionnels ; et
c) l'exposition dudit support contenant un mélange de polymérisation à une lumière bleue pendant une durée suffisante pour polymériser lesdits monomères ;
**caractérisé en ce que** ledit photoinitiateur est un oxyde de bis-acylphosphine, l'oxyde de bis-acylphosphine étant actif en tant que photoinitiateur en lui-même, sans transfert d'énergie de la part des autres composants.

2. Procédé selon la revendication 1, dans lequel le support revêtu de polyimide est un capillaire en verre de silice.

3. Procédé selon la revendication 2, comprenant en outre la liaison à l'intérieur dudit support d'une molécule d'ancrage comprenant à la fois une fonctionnalité silyle et une fonctionnalité vinyle.

4. Procédé selon la revendication 1, 2 ou 3, dans lequel lesdits monomères polymérisables comprennent des monomères hydrocarbonés contenant un groupe aryle.

5. Procédé selon l'une quelconque des revendications 1 à 4, dans lequel ledit photoinitiateur d'oxyde de bis-acylphosphine est choisi parmi l'Irgacure 149, l'Irgacure 819, l'Irgacure 1700 ou l'Irgacure 1800, l'Irgacure 1850, l'Irgacure 1870, l'Irgacure 2022, l'Irgacure 2100 ou leurs mélanges.

6. Procédé selon la revendication 5, dans lequel ledit photoinitiateur d'oxyde de bis-acyl-phosphine est l'Irgacure 819.

7. Procédé selon l'une quelconque des revendications 1 à 6, dans lequel ladite lumière bleue est fournie par une source dont le spectre d'émission comprend à la fois :
i) la longueur d'onde limite supérieure d'absorption de l'initiateur d'oxyde de bis-acylphosphine (spécifiquement 465 nm et inférieure) et ;
ii) une partie de la région transparente marginale du matériau de revêtement de polyimide (spécifiquement de 430 nm à 480 nm).

8. Procédé selon la revendication 7, dans lequel ladite source de lumière bleue est choisie parmi une lampe à filament de tungstène, une lampe fluorescente, une DEL ou un LASER.

9. Procédé selon la revendication 3, dans lequel ladite molécule d'ancrage comprenant à la fois une fonctionnalité silyle et une fonctionnalité vinyle est du méthacrylate de 3-(triméthoxy-silyl)propyle.

10. Procédé selon la revendication 4, dans lequel lesdits monomères aromatiques comprennent du divinylbenzène et du styrène.

11. Procédé selon la revendication 2, dans lequel ledit capillaire en verre de silice a un diamètre interne compris entre 40 µm et 600 µm.

12. Procédé selon la revendication 1 servant à préparer une colonne chromatographique polymère poreuse PLOT GC de type Q ; dans lequel le support est un capillaire en verre de silice revêtu de polyimide d'un diamètre interne choisi parmi 250 µm, 320 µm ou 530 µm ; le procédé comprenant en outre l'étape de liaison à l'intérieur dudit capillaire en verre de silice d'une molécule d'ancrage comprenant à la fois une fonctionnalité silyle et une fonctionnalité vinyle ; dans lequel le mélange de polymérisation comprend du divinylbenzène et du styrène, un photoinitiateur d'Irgacure 819, et des solvants et des porogènes optionnels ; et dans lequel l'exposition à la lumière bleue consiste à exposer ledit capillaire contenant le mélange de polymérisation à une lumière bleue provenant d'une pluralité de DEL dont le pic d'émission se trouve à des longueurs d'onde situées entre 430 nm et 480 nm pendant une durée suffisante pour polymériser lesdits monomères.

13. Procédé selon la revendication 12, dans lequel ladite molécule d'ancrage comprenant à la fois une fonctionnalité silyle et une fonctionnalité vinyle est du méthacrylate de 3-(tri-méthoxysilyl)propyle.
